(19) **Europäisches Patentamt**

**European Patent Office**

**Office européen des brevets**

(11) **EP 0 903 843 B1**

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(51) Int Cl.7: **H02M 7/48**

(21) Anmeldenummer: **98810735.5**

(22) Anmeldetag: **30.07.1998**

(54) **Wechselrichter**

Inverter

Onduleur

(84) Benannte Vertragsstaaten:
**AT CH DE LI SE**

(30) Priorität: **22.08.1997 DE 19736612**

(43) Veröffentlichungstag der Anmeldung:
**24.03.1999 Patentblatt 1999/12**

(73) Patentinhaber: **ABB Schweiz AG**
**5400 Baden (CH)**

(72) Erfinder:
• **Dähler, Peter**
**5236 Remigen (CH)**
• **Gaupp, Osvin**
**5400 Baden (CH)**

• **Linhofer, Gerhard**
**5405 Baden-Dättwil (CH)**
• **Ravot, Jean-François**
**01170 Chevry (FR)**

(74) Vertreter: **ABB Patent Attorneys**
**c/o ABB Schweiz AG**
**Brown Boveri Strasse 6**
**5400 Baden (CH)**

(56) Entgegenhaltungen:
**EP-A- 0 581 322**

• **FIEBER ET AL: "STATISCHER UMRICHTER MULDENSTEIN" ELEKTRISCHE BAHNEN, Bd. 93, Nr. 12, Januar 1995, Seiten 43-48, XP000492379 münchen**

**Beschreibung**

TECHNISCHES GEBIET

Die vorliegende Erfindung bezieht sich auf das Gebiet der Leistungselektronik. Sie betrifft einen Wechselrichter, umfassend eine Mehrzahl von am gleichen Gleichspannungszwischenkreis parallel arbeitenden Wechselrichterbrücken, deren Ausgangsspannungen über Summationsmittel aufsummiert werden, wobei die Wechselrichterbrücken jeweils nach Massgabe eines Trägersignals pulsdauermoduliert angesteuert werden und die Trägersignale der einzelnen Wechselrichterbrücken untereinander eine konstante Phasendifferenz aufweisen, und wobei die Summationsmittel einen Mittelabgriff aufweisen, welcher über eine Erdverbindung geerdet ist.

STAND DER TECHNIK

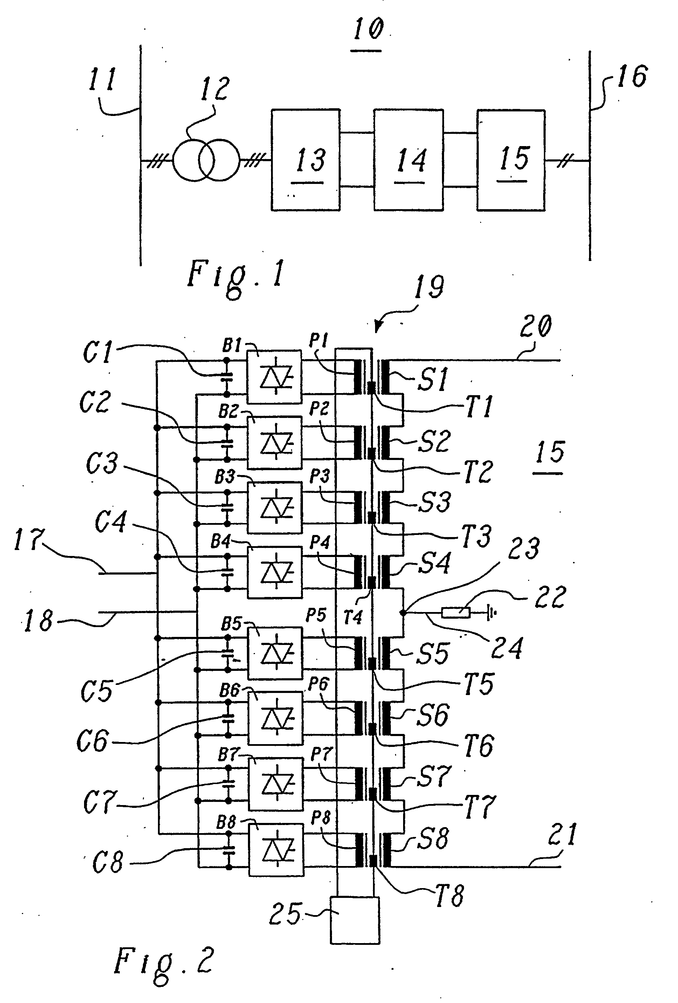

Zur Verbindung von Stromnetzen mit unterschiedlicher Phasenzahl und/oder Wechselspannungsfrequenz, wie z.B. zwischen einem 50Hz-Drehstromnetz und einem einphasigen 16 2/3Hz-Bahnnetz, werden zunehmend mit Leistungshalbleitern ausgerüstete vollstatische Kupplungen bzw. Bahnstromumrichter eingesetzt, die häufig als Umrichter mit Gleichspannungszwischenkreis ausgebildet sind. Gemäss Fig. 1 umfasst ein solcher Bahnstromumrichter 10 beispielsweise einen (thyristorbestückten) Stromrichter 13, der über einen Transformator 12 den Drehstrom aus dem Drehstromnetz 11 abnimmt und in einen Gleichstrom umwandelt, einen Gleichspannungszwischenkreis 14 zur Glättung bzw. Zwischenspeicherung, und einen Wechselrichter 15, der den Gleichstrom wieder in einen Wechselstrom der gewünschten Frequenz umwandelt und in das Bahnnetz 16 einspeist.

Im Wechselrichter 15 werden üblicherweise eine oder mehrere parallel arbeitende Wechselrichterbrücken mit schaltbaren Ventilen (z.B. GTOs) eingesetzt, die pulsdauermoduliert angesteuert werden und die gewünschte sinusförmige Ausgangsspannung durch eine Abfolge von dauermodulierten Rechteckimpulsen wechselnder Polarität approximieren. Zur Pulsdauermodulation wird dabei üblicherweise eine dreieckförmige Hilfssteuerspannung verwendet. Einzelheiten der Ansteuerung können beispielsweise einem Sonderdruck (Nr. 9608-1000-0) der Anmelderin, "Vollstatische 100-MW-Frequenzkupplung Bremen", entnommen werden. Werden mehrere Wechselrichterbrücken parallel betrieben, werden die Ausgangsspannungen aufsummiert. Eine Verringerung des Oberschwingungsgehalts wird dabei dadurch erreicht, dass die Ansteuerung der einzelnen Wechselrichterbrücken über die Hifssteuerspannungen phasenverschoben erfolgt.

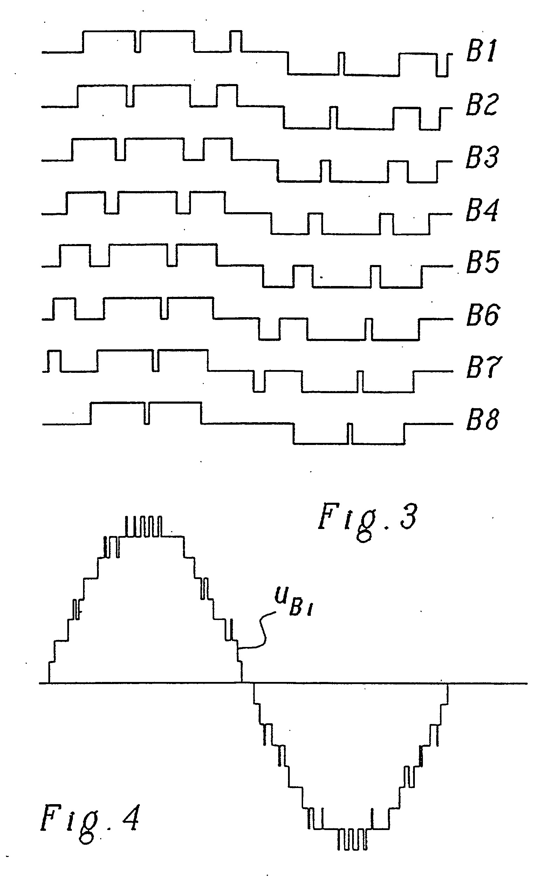

Ein beispielhafter Aufbau eines Wechselrichters 15 ist in Fig. 2 wiedergegeben. Der Wechselrichter 15 dieses Beispiels umfasst 8 parallel arbeitende Wechselrichterbrücken B1, .., B8, die jeweils mit einem parallelen Kondensator C1,..,C8 am Eingang an die vom Gleichspannungszwischenkreis 14 kommenden Eingangsleitungen 17, 18 angeschlossen sind. Zur Summation der Ausgangsspannungen der Wechselrichterbrücken B1,..,B8 ist ein Transformator 19 vorgesehen, der für jede der Wechselrichterbrücken B1,..,B8 ein Wicklungspaar aus einer Primärwicklung P1,..,P8 und einer Sekundärwicklung S1,..,S8 enthält. Die Ausgänge der Wechselrichterbrücken B1,..,B8 sind jeweils an die entsprechenden Primärwicklungen P1,..,P8 angeschlossen, die Sekundärwicklungen S1,..,S8 sind in Reihe geschaltet. Das summierte Ausgangssignal steht an den Ausgangsleitungen 20, 21 zur Verfügung. Zur Unterdrückung von Oberschwingungen kann der Transformator 19 zusätzlich mit Tertiärwicklungen T1,..,T8 ausgestattet sein, die in Reihe geschaltet und durch eine entsprechende Filterschaltung 25 bedämpft sind (siehe dazu beispielsweise die EP-B1-0 149 169). Beispielhafte dauermodulierte und phasenverschobene Impulsreihen für die Wechselrichterbrücken B1,..,B8 sind in Fig. 3 wiedergegeben. Durch Summation der einzelnen Impulsfolgen im Transformator 19 ergibt sich daraus die resultierende Summenspannung $u_{Bi}$ in Fig. 4.

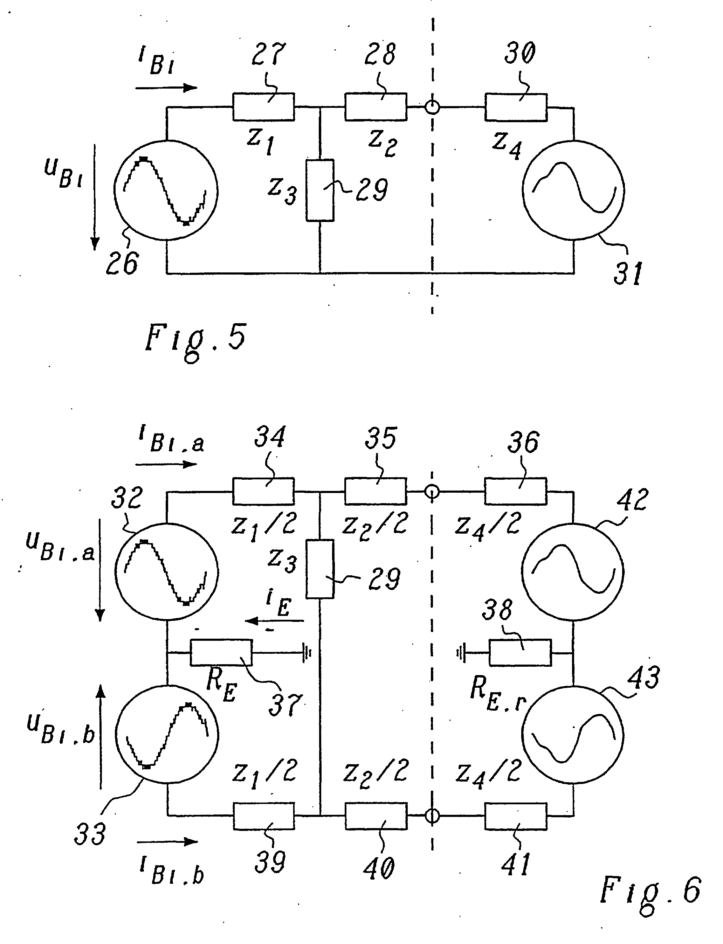

Probleme mit der in Fig. 2 dargestellten Art von Wechselrichter ergeben sich nun, wenn - wie es bei manchen Bahnnetzen erforderlich ist - der Transformator 19 des Wechselrichters 15 an einem Mittelabgriff 23 durch eine Erdverbindung 24 über einen Widerstand 22 (oder auch ohne Widerstand, d.h. "hart") geerdet wird (siehe Fig. 2). Diese Probleme lassen sich anhand der in Fig. 5 bis 8 wiedergegebenen Ersatzschaltbilder verdeutlichen: Der Wechselrichter, der als Spannungsquellenumrichter (Voltage Source Converter, VSC) arbeitet, kann grundsätzlich (Fig. 5) durch eine Spannungsquelle 26 mit der Spannung $u_{Bi}$ beschrieben werden, die einen entsprechenden Strom $i_{Bi}$ durch einen Kreis treibt, der durch die Impedanzen 27, 28 und 29 gebildet wird. Die Impedanzen 27 und 28 mit den Werten $z_1$ bzw. $z_2$ repräsentieren den Transformator 19, die Impedanz 29 mit dem Wert $z_3$ repräsentiert die Filterschaltung 25. Das Bahnnetz 16 lässt sich im Ersatzschaltbild durch die Impedanz 30 ($z_4$) und die Spannungsquelle 31 beschreiben.

Durch die Erdung (über den Widerstand 22) am Mittelabgriff 23 des Transformators 19 kann das Ersatzschaltbild des VSC aus Fig. 5 in ein Ersatzschaltbild gemäss Fig. 6 überführt werden. Die Spannungsquelle 26 ist hier in zwei Spannungsquellen 32 und 33 mit den Teilspannungen $u_{Bi,a}$ und $u_{Bi,b}$ aufgeteilt, wobei gilt:

$$(1) \qquad u_{Bi} = u_{Bi,a} - u_{Bi,b}$$

Die Impedanzen 27 und 28 des Transformators 19 sind in Fig. 6 nun aufgeteilt in Impedanzen 34 und 39 bzw. 35 und 40 mit jeweils der Hälfte des ur-

sprünglichen Impedanzwertes, nämlich $z_i/2$ und $z_2/2$. Die Impedanz 29 mit dem Wert $z_3$ bleibt erhalten, während die Impedanz 30 und die Spannungsquelle 31 des Bahnnetzes 16 ebenfalls aufgeteilt werden in die Impedanzen 36 und 41 (jeweils mit dem Wert $z_4/2$) bzw. Spannungsquellen 42 und 43. Die Erdung über den Mittelabgriff 23 des Transformators 19 wird in Fig. 6 durch den Widerstand 37 mit dem Wert $R_E$ repräsentiert. Ein entsprechender Widerstand 38 mit dem Wert $R_{E,r}$ beschreibt den gesamten Fern-Erdungswiderstand des Bahnnetzes 16.

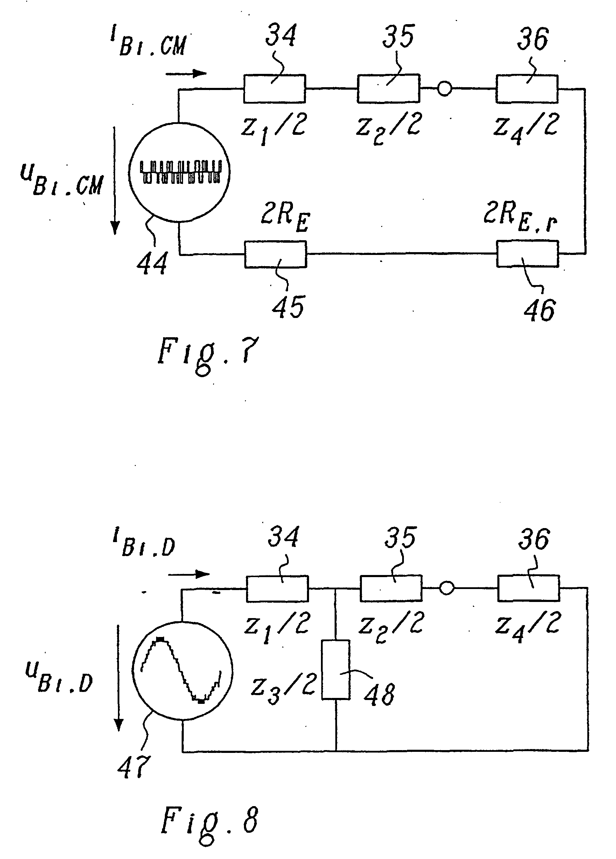

Nach dem Konzept der modalen Zerlegung ("Modal Decomposition") kann das Ersatzschaltbild der Fig. 6 in zwei überlagerte Teilsysteme zerlegt werden, nämlich in das Gleichtakt-System ("Common Mode System") und das Gegentakt-System ("Differential Mode System"). Die beiden überlagerten Systeme können dann getrennt voneinander behandelt und die resultierenden Ströme und Spannungen nach Beendigung der Analyse einfach addiert werden, um die realen physikalischen Grössen zu erhalten. Das Ersatzschaltbild im Gleichtakt-System für die obere Hälfte des VSC ist in Fig. 7 wiedergegeben. Neben den bereits bekannten Impedanzen 34, 35 und 36 befinden sich im Stromkreis die Widerstände 45 und 46, welche jeweils das Doppelte der Erdungswiderstände 37 bzw. 38 ausmachen. Die Spannungsquelle 44 gibt eine Spannung $u_{Bi,CM}$ ab, die einen Strom $i_{Bi,CM}$ durch den Kreis treibt. Das Ersatzschaltbild im Gegentakt-System für die obere Hälfte des VSC ist in Fig. 8 dargestellt. Neben den bereits bekannten Impedanzen 34, 35 und 36 ist hier zusätzlich die Impedanz 48 vorhanden, welche der halben Impedanz 29 entspricht und für die Filterschaltung 25 charakteristisch ist. Die Spannungsquelle 47 gibt eine Spannung $u_{Bi,D}$ ab, die einen Strom $i_{Bi,D}$ durch den Kreis treibt.

Für die Spannungen und Ströme ergibt sich der folgende Zusammenhang:

$$(2) \qquad u_{Bi,a} = u_{Bi,CM} + u_{Bi,D}$$

$$(3) \qquad u_{Bi,b} = u_{Bi,CM} - u_{Bi,D},$$

sowie

$$(4) \qquad i_{Bi} = i_{Bi,CM} + i_{Bi,D}$$

und

$$(5) \qquad i_E = 2 \cdot i_{Bi,CM}.$$

Aus den Fig. 5 bis 8 und den Gleichungen (1) bis (5) ergibt sich unmittelbar, dass die Gleichtaktspannung $u_{Bi,CM}$ unerwünscht ist, weil sie einen Gleichtaktstrom $i_{Bi,CM}$ treibt, der nur durch die Erdungswiderstände 37 und 38 zurückfliessen kann. Die Höhe des Gleichtaktstromes $i_{Bi,CM}$ ist hauptsächlich durch die Impedanzen $z_1$ und $z_2$ des Transformators 19 begrenzt. Der Gleichtaktstrom $i_{Bi,CM}$ hat zwei nachteilige Wirkungen:

-   Er bewirkt erhebliche Verluste sowohl im lokalen Erdungswiderstand 22 bzw. 37 als auch im Fern-Erdungswiderstand 38. Wie Simulationen einer realen Anlage (ca. 50MW) zeigen, können die Verluste im Erdungswiderstand 22 (bei einem nominalen Widerstandswert von $R_E = 334\ \Omega$) ungefähr 50kW betragen und sind daher von einer unakzeptablen Grössenordnung.

-   Er kann in dem Bahnnetz (z.B. einem 138kV-Netz) Störungen in benachbarten Kommunikationseinrichtungen hervorrufen.

DARSTELLUNG DER ERFINDUNG

Es ist daher Aufgabe der Erfindung, einen VSC-Wechselrichter zu schaffen, bei welchem die über die Erdverbindung fliessenden Ströme unterdrückt bzw. auf einen unschädlichen Wert gedämpft werden.

Die Aufgabe wird bei einem Wechselrichter der eingangs genannten Art dadurch gelöst, dass zur Dämpfung bzw. Unterdrückung von über die Erdverbindung fliessenden gleichphasigen Störströmen und den damit verbundenen Störspannungen in der Erdverbindung Schaltmittel angeordnet sind. Durch die Anordnung der Schaltmittel direkt in der Erdverbindung kann verhindert werden, dass im Normalfall (wenn die Schaltmittel offen sind) gleichphasige Störströme über die Erdverbindung fliessen. Im Kurzschlussfall können die Schaltmittel geschlossen werden, so dass die Kurzschlussströme zur Erde abfliessen können.

Eine erste bevorzugte Ausführungsform der Erfindung zeichnet sich dadurch aus, dass die Schaltmittel eine als Sättigungsdrossel ausgebildete Drossel umfassen. Die Drossel stellt für die Gleichtaktströme bei geeigneter Auslegung eine hohe Impedanz dar, ohne die ohmsche Verbindung des Mittelabgriffs zur Erde im Fehlerfall zu beeinträchtigen. Zugleich ist die Drossel als passives Bauelement einfach und sicher in der Funktion.

Im normalen Betriebsfall erfüllt eine einfache Drossel problemlos die an sie gestellten Anforderungen. Probleme würden sich jedoch im Falle eines Kurzschlusses im Bahnnetz ergeben, weil dann die hohe Impedanz der Drossel ein Abfliessen des steil ansteigenden Kurzschlusstromes zur Erde verhinderte und damit andere Anlagenteile gefährdete. Die Aufhebung der Dämpfungsfunktion im Kurzschlussfall wird dadurch erreicht, dass die Drossel als Sättigungsdrossel ausgebildet ist, deren Spannungs-Zeit-Fläche der zu erwartenden Spannungs-Zeit-Fläche der Störspannungen bzw. Störströme im Normalbetrieb angepasst ist. Im Normalfall arbeitet die Sättigungsdrossel unterhalb der Sättigung und dämpft die in der Erdverbindung fliessenden Ströme. Im Kurzschlussfall geht die Sättigungsdrossel in die Sättigung und lässt dann weitgehend ungehindert den Kurzschlusstrom passieren.

Eine andere bevorzugte Ausführungsform zeichnet sich dadurch aus, dass die Schaltmittel einen Thyristorschalter umfassen. Im normalen Betrieb ist der Thyristorschalter geschlossen und verhindert so sicher, dass die genannten Störströme über die Erdverbindung fliessen können. Im Kurzschlussfall wird der Thyristorschalter, der z.B aus zwei antiparallelen Thyristoren besteht, geschlossen, und die Kurzschlusströme können ungehindert über die Erdverbindung fliessen.

Weitere Ausführungsformen ergeben sich aus den abhängigen Ansprüchen.

Bevorzugt wird ein Wechselrichters nach der Erfindung in einem Umrichter mit Gleichspannungszwischenkreis, insbesondere in einem Bahnstromumrichter oder einer Frequenzkupplung, eingesetzt.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1    den prinzipiellen Aufbau eines Bahnstromumrichters;

Fig. 2    das Blockschaltbild eines für den Bahnstromumrichter nach Fig. 1 geeigneten Wechselrichters mit einer Mehrzahl von parallelen Wechselrichterbrücken und mit Mittelpunktserdung des Transformators;

Fig. 3    beispielhafte pulsdauermodulierte Ausgangsimpulsfolgen der einzelnen Wechselrichterbrücken aus Fig. 2;

Fig. 4    die sich durch Aufsummierung der Ausgangsimpulsfolgen aus Fig. 3 ergebende Summenspannung;

Fig. 5    das Ersatzschaltbild des mit dem Bahnnetz verbundenen Wechselrichters aus Fig. 4 ohne Mittelpunktserdung des Transformators;

Fig. 6    das zu Fig. 5 entsprechende Ersatzschaltbild bei vorhandener Mittelpunktserdung;

Fig. 7    das aus dem Ersatzschaltbild der Fig. 6 abgeleitete Ersatzschaltbild für das Gleichtakt-Teilsystem;

Fig. 8    das aus dem Ersatzschaltbild der Fig. 6 abgeleitete Ersatzschaltbild für das Gegentakt-Teilsystem;

Fig. 9    ein erstes bevorzugtes Ausführungsbeispiel für einen Wechselrichter nach der Erfindung mit einer sättigbaren Drossel zur Unterdrückung der in der Erdleitung fliessenden Gleichtaktströme; und

Fig. 10    ein zweites bevorzugtes Ausführungsbeispiel für einen Wechselrichter nach der Erfindung mit einem Thyristorschalter zur Unterdrückung der in der Erdleitung fliessenden Gleichtaktströme.

WEGE ZUR AUSFÜHRUNG DER ERFINDUNG

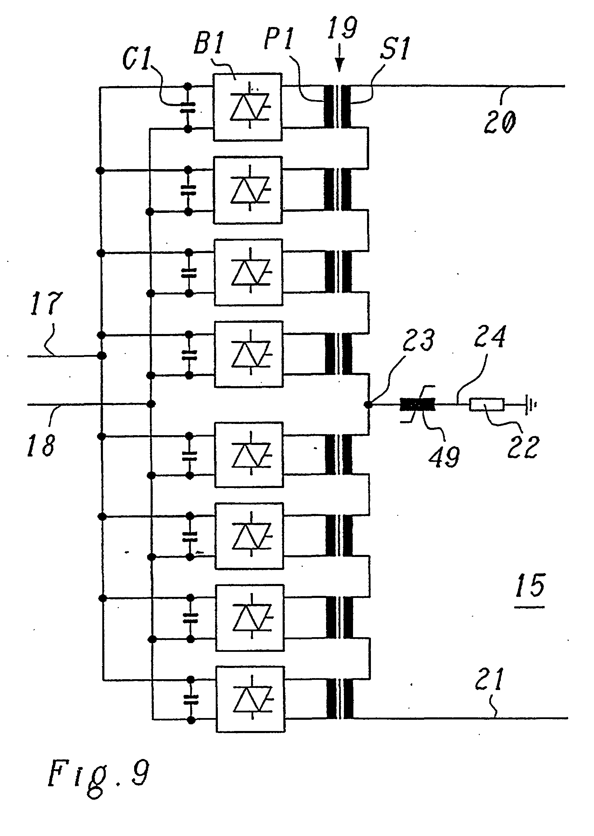

In der Fig. 9 ist ein bevorzugtes Ausführungsbeispiel für einen Wechselrichter nach der Erfindung wiedergegeben. Der Wechselrichter der Fig. 9 gleicht in seinem Aufbau im wesentlichen dem Wechselrichter der Fig. 2. Die Tertiärwicklungen am Transformator 19 sowie die dazugehörige Filterschaltung 25 sind hier der Einfachheit halber weggelassen. In die Erdverbindung 24, die vom Mittelabgriff 23 des Transformators über einen Widerstand 22 zur Erde führt, ist zur Dämpfung bzw. Unterdrückung der Gleichtaktströme in der Erdverbindung eine zum Widerstand 22 in Serie liegende Sättigungsdrossel 49 vorgesehen. Die Charakteristik der Sättigungsdrossel 49 ist dabei so bemessen, dass im normalen (stationären) Betriebsfall des Wechselrichters 15 die zu erwartenden gleichphasigen Ströme, die bei der geringen Anzahl von 8 Wechselrichterbrücken B1,.., B8 relativ hoch sein können, stark gedämpft werden, während im Kurzschlussfall die Sättigungsdrossel 49 in die Sättigung gesteuert wird und den Kurzschlusstrom weitgehend ungehindert passieren lässt. Dazu wird die Spannungs-Zeit-Fläche der Sättigungsdrossel der zu erwartenden Spannungs-Zeit-Fläche der Störspannungen im Normalbetrieb angepasst.

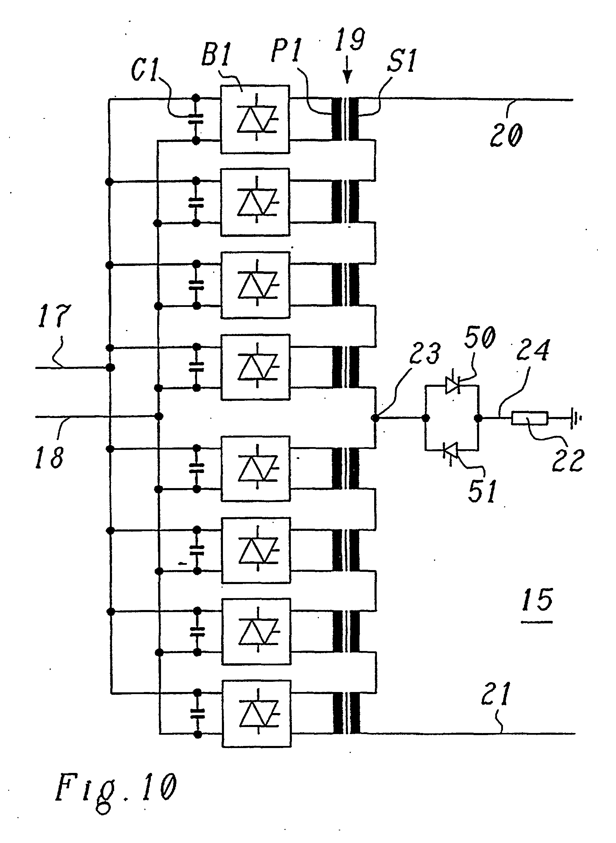

Wie bereits weiter oben erwähnt kann gemäss Fig. 10 anstelle der Sättigungsdrossel 49 als Schaltmittel auch ein beispielsweise aus zwei antiparallel geschalteten Thyristoren 50, 51 gebildeter Thyristorschalter verwendet werden, der im Normalfall offen ist und im Kurzschlussfall durchgesteuert wird.

Weiterhin ist es denkbar, die Sättigungsdrossel 49 auch bei einem Wechselrichter einzusetzen, der am Mittelabgriff des Transformators "hart" geerdet ist, d.h., keinen speziellen Erdungswiderstand 22 aufweist.

Beispiel: Es ergibt sich bei einer übertragenen Nennleistung von ca. 55MVA und einer Anzahl von 8 Wechselrichterbrücken ohne Dämpfungsmassnahmen eine Gleichtakt-Stromverzerrung (Gleichtaktströme), die etwa 3% des Nennstromes (von ca. 400A) ausmacht. An einem Erdungswiderstand 22 bzw. 37 von $R_E$ = 240Ω fällt dann eine maximale Verlustleistung von 100kW ab. Durch Einfügung einer Sättigungsdrossel 49 mit einer ungesättigten Induktivität von ≥ 2H in die Erdverbindung 24 kann die Stromverzerrung und damit die am Erdungswiderstand abfallende Verlustleistung auf < 5kW reduziert werden.

Die Erfindung ist in Fig. 9, 10 im Zusammenhang mit einem 1-phasigen Transformator erläutert worden. Es versteht sich jedoch von selbst, dass sie entsprechend auf einen 3-phasigen Transformator anwendbar ist.

BEZEICHNUNGSLISTE

| | |
|---|---|
| 10 | Bahnstromumrichter |
| 11 | Drehstromnetz |
| 12 | Transformator (3-phasig) |
| 13 | Stromrichter |
| 14 | Gleichspannungszwischenkreis |
| 15 | Wechselrichter |
| 16 | Bahnnetz |
| 17,18 | Eingangsleitung (Wechselrichter) |
| 19 | Transformator (Wechselrichter) |
| 20,21 | Ausgangsleitung (Wechselrichter) |
| 22 | . Widerstand |
| 23 | Mittelabgriff (Transformator) |
| 24 | Erdverbindung |
| 25 | Filterschaltung |
| 26,31 | Spannungsquelle |
| 27,..,30 | Impedanz |
| 32,33 | Spannungsquelle |
| 34,..,36 | Impedanz |
| 37,38 | Widerstand |
| 39,..,41 | Impedanz |
| 42,43 | Spannungsquellen |
| 44,47 | Spannungsquelle |
| 45,46 | Widerstand |
| 48 | Impedanz |
| 49 | Drossel (Sättigungsdrossel) |
| 50,51 | Thyristor |
| B1,..,B8 | Wechselrichterbrücke |
| C1,..,C8 | Kondensator |
| P1,..,P8 | Primärwicklung |
| S1,..,S8 | Sekundärwicklung |
| T1,..,T8 | Tertiärwicklung |

**Patentansprüche**

1. Wechselrichter (15), umfassend eine Mehrzahl von am gleichen Gleichspannungszwischenkreis (14 parallel arbeitenden Wechselrichterbrücken (B1,.., B8), deren Ausgangsspannungen über Summationsmittel (19) aufsummiert werden, wobei die Wechselrichterbrücken (B1,..,B8) jeweils nach Massgabe einer Hilfssteuerspannung pulsdauermoduliert angesteuert werden und die Hilfssteuerspannungen der einzelnen Wechselrichterbrücken (B1,..,B8) untereinander eine konstante Phasendifferenz aufweisen, und wobei die Summationsmittel (19) einen Mittelabgriff (23) aufweisen, welcher über eine Erdverbindung (24) erdbar ist, **dadurch gekennzeichnet, dass** zur Dämpfung bzw. Unterdrückung von über die Erdverbindung (24) fliessenden gleichphasigen Störströmen und den damit verbundenen Störspannungen in der Erdverbindung (24) Schaltmittel (49, 50, 51) angeordnet sind.

2. Wechselrichter nach Anspruch 1, **dadurch gekennzeichnet, dass** die Schaltmittel eine als Sättigungsdrossel ausgebildete Drossel (49) umfassen.

3. Wechselrichter nach Anspruch 2, **dadurch gekennzeichnet, dass** die Spannungs-Zeit-Fläche der Drossel (49) der zu erwartenden Spannungs-Zeit-Fläche der Störspannungen bzw. Störströme im Normalbetrieb angepasst ist.

4. Wechselrichter nach Anspruch 1, **dadurch gekennzeichnet, dass** die Schaltmittel einen Thyristorschalter (50, 51) umfassen.

5. Wechselrichter nach einem der Ansprüche 1 bis 4, **dadurch gekennzeichnet, dass** in der Erdverbindung (24) ein widerstand (22) angeordnet ist, und dass die Schaltmittel (49, 50, 51) in der Erdverbindung (24) in Serie mit dem Widerstand (22) geschaltet sind.

6. Wechselrichter nach einem der Ansprüche 1 bis 5, **dadurch gekennzeichnet, dass** die Summationsmittel einen Transformator (19) umfassen, welcher eine der Anzahl der Wechselrichterbrücken (B1,.., B8) entsprechende Anzahl von Primärwicklungen (P1,..,P8) und zugehörigen Sekundärwicklungen (S1,..,S8) aufweist, dass jede Wechselrichterbrücke (B1,..,B8) jeweils ausgangsseitig an eine Primärwicklung (P1,..,P8) angeschlossen ist, und dass die Sekundärwicklungen (S1,..,S8) zur Summation der Ausgangsspannungen in Serie geschaltet sind.

7. Wechselrichter nach Anspruch 6, **dadurch gekennzeichnet, dass** 2n (n=1,2,3,..) Wechselrichterbrücken (B1,..,B8) bzw. Primärwicklungen (P1,.., P8) und Sekundärwicklungen (S1,..,S8) vorgesehen sind, und dass der Mittelabgriff (23) zwischen der n-ten und der (n+1)-ten Sekundärwicklung angeordnet ist.

8. Verwendung eines Wechselrichters (15) nach einem der vorhergehenden Ansprüche in einem Umrichter (10), **dadurch gekennzeichnet, dass** ein zur Gleichrichtung einer Wechselspannung vorgesehener Stromrichter (10) über einen Gleichspannungszwischenkreis (14) mit dem Wechselrichter (15) verbunden ist.

## Claims

1. Invertor (15), comprising a number of invertor bridges (B1,...,B8) which operate in parallel from the same DC intermediate circuit (14) and whose output voltages are added via summation means (19), with the invertor bridges (B1,...,B8) each being driven with pulse-duration modulation on the basis of an auxiliary control voltage, and the auxiliary control voltages of the individual invertor bridges (B1,...,B8) having a constant phase difference between them, and with the summation means (19) having a centre tap (23) which can be earthed via an earth connection (24), **characterized in that** switching means (49, 50, 51) are arranged in the earth connection (24) in order to damp or suppress in-phase interference currents, flowing via the earth connection (24), and the interference voltages associated with them.

2. Invertor according to Claim 1, **characterized in that** the switching means comprise an inductor (49) in the form of a saturation inductor.

3. Invertor according to Claim 2, **characterized in that** the voltage/time interval of the inductor (49) is matched, during normal operation, to the voltage/time interval to be expected for the interference voltages and interference currents.

4. Invertor according to Claim 1, **characterized in that** the switching means have a thyristor switch (50,51).

5. Invertor according to one of Claims 1 to 4, **characterized in that** a resistor (22) is arranged in the earth connection (24) and **in that** the switching means (49, 50, 51) are connected in series with the resistor (22) in the earth connection (24).

6. Invertor according to one of Claims 1 to 5, **characterized in that** the summation means have a transformer (19), which has a number of primary windings (P1,...,P8) and associated secondary windings (S1,..,S8) corresponding to the number of invertor bridges (B1,...,B8), **in that** each invertor bridge (B1,...,B8) is connected on the output side to a respective primary winding (P1,...,P8) and **in that** the secondary windings (S1,...,S8) are connected in series, for summation of the output voltages.

7. Invertor according to Claim 6, **characterized in that** 2n (n=1,2,3,..) invertor bridges (B1,...,B8) as well as primary windings (P1,...,P8) and secondary windings (S1,...,S8) are provided, and **in that** the centre tap (23) is arranged between the n-th and the (n+1)-th secondary winding.

8. Use of an invertor (15) according to one of the preceding claims in a converter (10), **characterized in that** a converter (10), which is intended for rectification of an AC voltage, is connected to the invertor (15) via a DC voltage intermediate circuit (14).

## Revendications

1. Onduleur (15) comprenant une multiplicité de ponts onduleurs (B1,.., B8) fonctionnant en parallèle sur le même circuit intermédiaire de tension continue (14), dont les tensions de sortie sont sommées à l'aide de moyens de sommation (19), les ponts onduleurs (B1,.., B8) étant respectivement commandés par modulation de durée d'impulsion en fonction d'une tension de commande annexe et les tensions de commande annexes des ponts onduleurs (B1,.., B8) individuels présentant les uns par rapport aux autres une différence de phase constante, et les moyens de sommation (19) présentant une prise médiane (23) pouvant être mise à la terre au moyen d'une liaison de terre (24), **caractérisé en ce que** des moyens de commutation (49, 50, 51) sont disposés pour l'amortissement, respectivement la répression de courants perturbateurs en phase circulant à travers la liaison de terre (24) et des tensions perturbatrices qui leurs sont associées dans la liaison de terre (24).

2. Onduleur selon la revendication 1, **caractérisé en ce que** les moyens de commutation comprennent une bobine (49) formée en bobine de saturation.

3. Onduleur selon la revendication 2, **caractérisé en ce que** le plateau de la tension en fonction du temps de la bobine (49) est adapté au plateau de la tension en fonction du temps attendu de la part des tensions perturbatrices et respectivement des courants perturbateurs en fonctionnement normal.

4. Onduleur selon la revendication 1, **caractérisé en ce que** les moyens de commutation comprennent un commutateur à thyristors (50, 51).

5. Onduleur selon l'une des revendications 1 à 4, **caractérisé en ce qu'**une résistance (22) est disposée dans la liaison de terre (24) et **en ce que** les moyens de commutation (49, 50, 51) sont branchés en série avec la résistance (22) dans la liaison de terre (24).

6. Onduleur selon l'une des revendications 1 à 5, **caractérisé en ce que** les moyens de sommation comprennent un transformateur (19) présentant un nombre d'enroulements primaires (P1,.., P8) et d'enroulements secondaires (S1,.., S8) associés, correspondant au nombre de ponts onduleurs (B1,.., B8), **en ce que** chaque pont onduleur (B1,..,

B8) est respectivement branché du côte de la sortie à un enroulement primaire (P1,.., P8), et **en ce que** les enroulements secondaires (S1,.., S8) sont branchés en série pour la sommation des tensions de sortie.

7. Onduleur selon la revendication 6, **caractérisé en ce que** 2n (n=1, 2, 3,..) ponts onduleurs (B1,.., B8) respectivement enroulements primaires (P1,.., P8) et enroulements secondaires (S1, .., S8) sont prévus, et **en ce que** la prise médiane (23) est disposée entre les enroulements secondaires n et (n+1).

8. Utilisation d'un onduleur (15) selon l'une des revendications précédentes dans un convertisseur (10), **caractérisée en ce qu'**un redresseur (10) prévu pour le redressement d'une tension alternative est relié à un onduleur (15) à travers un circuit intermédiaire à courant continu (14).

Fig.1

Fig.2

B1
B2
B3
B4
B5
B6
B7
B8

Fig. 3

$u_{B1}$

Fig. 4

Fig.5

Fig.6

Fig. 7

Fig. 8

Fig.9

Fig. 10